Europäisches Patentamt

European Patent Office

Office européen des brevets

(11) Publication number: **0 406 423 A1**

# EUROPEAN PATENT APPLICATION
## published in accordance with Art. 158(3) EPC

(21) Application number: 89904302.0

(22) Date of filing: **19.01.89**

(86) International application number:
**PCT/SU89/00014**

(87) International publication number:
**WO 90/08432 (26.07.90 90/17)**

(51) Int. Cl.5: **H04B 7/00**

(43) Date of publication of application:
**09.01.91 Bulletin 91/02**

(84) Designated Contracting States:
**DE FR GB NL**

(71) Applicant: **Tesler, Vladimir Efimovich**
**Kvartira 120, Korpus 1 Prospekt Mira 91**
**Moscow(SU)**

(72) Inventor: **Tesler, Vladimir Efimovich**
**Kvartira 120, Korpus 1 Prospekt Mira 91**
**Moscow(SU)**

(74) Representative: **Sturt, Clifford Mark et al**
**MARKS & CLERK 57-60 Lincoln's Inn**
**Fieldsids**
**London WC2A 3LS(GB)**

(54) **METHOD FOR TRANSMISSION AND RECEPTION OF REFLEX-MODULATED SIGNALS.**

(57) A method for transmission and reception of reflex-modulated signals in which a reflex-modulated signal containing all the frequency components of the upper ($f_{lim} + f_o$) and lower ($f_{lim} - f_o$) side bands is generated at the transmitting side through modulation by the information signal of the carrier, whose frequency ($f_o$) is smaller than the difference between the upper and lower boundary frequencies of one scanned side band of the reflex-modulated signal. At the receiving side the received reflex-modulated signals are processed by multiplying them by the signals consisting of the sums of harmonic components with chosen frequency and phase values and then, by summing the voltages resulting from said multiplications the spectrum of each reflex-modulated signal is brought to a form allowing the extraction of the modulating signal from the processed reflex-modulated signal.

FIG. 1

# METHOD FOR FOLDED=BAND RADIO SIGNAL TRANSMISSION AND RECEPTION

## Field of the Invention

The invention relates to communications systems technology, in particular to telecommunications, and more specifically to a method for folded=band signal transmission and reception.

## Background Art

Modulated radio signals with a folded lower sideband, in terms of their properties, are intermediate between proper modulating (data) signals and radio signals with a radio frequency carrier. Here the radio signal carrier frequency is considered to be such, that bot sidebands of the signal are unfolded, i.e. the ratio of one sideband bandwidth to the carrier frequency is equal to or less than unity.

Strictly speaking, this definition is not absolutely exact theoretically, because any radio signal, being time=limited, features an infinite spectrum and therefore a folded sideband. However, in actual practice, of interest are frequency bands usually considered as finite, such as:

- the required bandwidth of a radio signal, as defined in accordance with the criterion of sufficiency for data transmission at the speed and integrity specified;

- the occupied bandwidth, as defined by the admissible power radiated outside this bandwidth (and causing interference to other radio facilities).

As the criterion for selecting the radio signal carrier frequency the allowable power of frequency components of the folded band which fall within the required bandwidth and impede attaining the specified speed and integrity of data transmission, should be adopted. If the power of these components is low enough to make special measures to suppress alias components redundant, the radio signal carrier frequency may be considered to be a high frequency

- 2 -

(radio frequency) carrier. On the contrary, if the folded sideband power is a noticeable part of the signal spectrum, this as a rule indicating that part of the components of the required lower sideband are folded, the carrier frequency is defined as a low frequency carrier. In such cases the ratio of the bandwidth to the carrier frequency exceeds unity and its value shall be used to evaluate the degree of the carrier frequency lowness. For instance, with amplitude modulation, at a limiting frequency of the modulating signal spectrum below the carrier frequency, the latter can be defined as a high frequency one. With frequency modulation, at a quiescent carrier above the upper limiting frequency of the modulating signal spectrum, the carrier frequency may be considered both as a high frequency and as a low frequency one, depending on the modulation index.

Since the defining attribute of radio signals with a low frequency carrier is the presence of a partially folded lower sideband, such signals may be termed "folded" "folded=band", or "fold=modulated", and the process of their generation can be termed "fold modulation", or "folded=band modulation".

With rare exceptions, radio signals with low frequency carriers are avoided in data transmission applications, in particular due to interference caused by the folded sideband. In cases when a low frequency carrier has to be used, as for instance in magnetic videotape recording and TV signal transmission via cable transmission lines, special measures are employed to suppress the folded sideband. In videotape recording the trend is to increase the quiescent frequency (high band recording) and reduce the modulation index. In cable communications lines, with video signal translation to a low carrier frequency, the lower sideband is partially suppressed to produce a signle=sideband radio signal (SSB signal), the process sometimes termed single=sideband modulation (SSBM) and single=sideband transmission (SSBT).

At the same time, signals with low carrier frequencies and folded sidebands (folded=band signals) feature a number of interesting properties, in particular:

- at a sufficiently low carrier frequency (bandwidth=to=carrier frequency ratio much higher than unity) the bandwidth occupied by the folded radio signal in the communications channel approaches that of a single sideband;

- the spectrum of a folded radio signal contains frequency component of both the upper and lower sidebands, so that it can be assumed that a folded=band signal retains all the information carried by a signal with a high carrier frequency (double sideband signal);

- at a wideband modulating signal with a DC component ("zero frequencies") the carrier frequency of a folded=band signal may be selected to be very low (for instance, units of kilohertz at the modulating signal spectrum bandwidth from zero to units and dozens of megahertz), with folded=band modulation of such a low carrier frequency acomplished by very simple hardware; single sideband radio transmission at such relations between the modulating signal bandwidth and carrier frequency is practically impossible, because suppression of the second sideband would require the use of an almost ideal filter, with a passband of the order of megahertz and a cutoff slope of dozens of decibel per dozens of kilohertz; therefore, in actual communications systems, such as cable communications lines transmitting TV signals, partial sideband suppression is used and the carrier frequency is selected to be 20% to 40% of the upper frequency of the modulating videosignal spectrum;

- band folding allows easy implementation of any type of modulation, both amplitude modulation (including

- 4 -

quadrature) and angle modulation, which may be termed "band folding amplitude modulation - BFAM", " band folding suppressed carrier modulation-BFSCM", "band folding quadrature modulation -BFQM", and " band folding angle modulation -BFAnM", this latter including "band folding frequency modulation -BFFM" and "band folding phase modulation -BFPM".

In contrast, single=sideband radio transmission practically allows only amplitude modulation by a single signal, both with and without carrier freeuqncy suppression, and only approximately with wideband signals containign a DC component; as mentioned herein above, it can be shown that conversion of a double sideband radio signal with quadrature or angle modulation into two single sideband radio signal messages with a very low carrier frequency and subsequent restoration of the initial double sideband signal is theoretically representable; however, practical implementation is possible only on condition that almost ideal filters and almost ideal phaseshifters are practicable, the latter providing an exact phase shift by, for instance, $90^{o}$, of all spectrum components with frequencies ranging from units of hertz or kilohertz to units or dozens of megahertz.

At the same time, a number of problems in communications could be solved by translating wideband signals to a low carrier frequency, these problems including, in particular, such as:

- picture signal transmission via video frequency channels, wherein transmission of "zero" frequencies is impeded (for instance, with the same communication channel carrying a DC voltage for hardware functioning, at elevated levels of low frequency interference, including industrial mains hum, etc.);

- generation of complex, for instance TV, signals for transmission at a low carrier frequency to achieve simultaneous transmission of two independent messages in a

- 5 -

standard bandwith;

- signal transmission via integrated networkds containing both radio and video frequency links, for instance via optical fibre communications lines with analogue and digital transmission, without resorting to demodulation and repeated modulation.

Siggle sideband modulation or its modifications may be the means for solving such problems only in certain exceptional cases (such as TV transmission via cable communications lines), the major obstadle being either the necessity of substantially expanding the bandwidth, or engineering complexity (or impoassibllity) of practical implementation.

Neither were folded=band signals utilized, though they were already known, because, as a rule, they were generated accidentally, for instance during translation of modulated double sideband signals with a high carrier frequency to another carrier frequency using a local oscillator, the frequency whereof for one reason or another happened to approach the carrier frequency of the initial signal, this leading to the radio signal being translated to a low carrier frequency with spectrum folding. Thus, the folded=band radio signal (though not yet termed so) itself was known, as well as means for its generation (i.e. what is proposed to be termed folded=band modulation), but since it could not be usefully applied to data transmission (means for detecting the modulating signal out of a folded=band radio signal were unknown), signal translation to a low carrier frequency with band folding was not in use.

## Disclosure of the Invention

This invention is to provide a method for transmitting useful information with the aid of folded=band signals and for reception of folded=band signals and detecting the useful information transmitted by reducing

- 6 -

their spectrum to a form allowing detection of the modulating signal.

This is achieved by that in the method for folded=band signal transmission and reception, according to this invention the folded=band signal containing all the frequency components of the upper and lower sidebands is generated at the transmitting side by modulating a carrier frequency $f_o$ that is lower than the difference between the upper and lower limiting frequencies of an unfolded sideband of the folded=band signal, and processing the received folded=band signals at the receiving side by multiplying them with signals that are the sum of harmonic components with preselected frequencies and phases, with subsequent summing of the products and reduction of the folded=band signal spectrum to a form allowing detection of the modulating signal therefrom.

It is expedient, that in the method of this invention, when applied to reception of folded=band amplitude modulated signals with or without carrier frequency suppression, processing of the received folded=band signals be executed with conversion of the folded=band signal's carrier frequency by sequential multiplication of folded=band voltages by N harmonic signals, with the frequency of the i=th harmonic signal set to $f_o 2^{i-1}$ (where $1 \leq i \leq N$), and the modulating signal be detected with unfolded sidebands at a converted carrier frequency $f_o 2^N$, the value whereof exceeds the upper limiting frequency in the modulating signal spectrum.

It is also expedient, that in the method of this invention, when receiving folded=band amplitude modulated signals with or without carrier frequency suppression, processing of the folded=band signals be performed with conversion of the folded=band signal's carrier frequency $f_o$ by multiplying this folded=band signal by a signal of the form:

- 7 -

$$U(t) = \sum_{i=1}^{N} (-1)^i \sin(2i - 1)\omega_0 t,$$

where $\omega_0 = 2\pi f_0$, $1 \leqslant i \leqslant N$, and the modulating signal be detected with unfolded sidebands at a carrier frequency $f_0 2^N$ exceeding the upper limiting frequency in the modulating signal spectrum.

It is also expedient, that in the method of this invention, as applied to the reception of folded=band amplitude modulated signals with or without carrier frequency suppression, the received folded=band signals be processed with conversion of the carrier frequency $f_0$ by N independent multiplication operations, in each operation the folded=band signal being multiplied by a harmonic signal of the form:

$$U(t) = (-1)^i \sin\left[\omega_x + \omega_0 (2i - 2)\right] t,$$

where $\omega_x = 2\pi f_x \geqq \omega_0 = 2\pi f_0$, and the products of these operations be summed, with modulating signal detection carried out with unfolded sidebands and at a carrier frequency $f_x + f_0 (2N - 1)$ exceeding the difference frequency $f_x - f_0$.

It is also expedient, that in the method of this invention, as applied to the reception of folded=band quadrature modulated and folded=band angle modulated signals, two messages transmitted by folded=band signals with a phase difference of $\Delta\varphi_0 \neq \pm K\pi$ (where K is an integer) be processed conjointly by multiplying each message by a corresponding harmonic signal, frequency $f_x$ of both harmonic signals being the same and exceeding the upper limiting frequency in the folded=band signal spectrum being processed, and the phase shift between these harmonic signals selected equal to $\pi - \Delta\varphi_0$, the voltages generated as products of both multiplication operations be algebraically summed, thus producing a modulated signal with munfolded sidebands and a high frequency $f_x \pm f_0$ carrier for detection.

- 8 -

It is further expedient, that in the method of this invention, as applied to the reception of folded=band quadrature modulated signals, two messages transmitted with folded=band signals be processed coinjointly, with the phase shift between the carrier frequencies thereof constituting $\Delta\varphi_o \neq K\pi$ (where K is an integer), by multiplying one message by a harmonic signal of the form $U_1(t) = 2\sin 2\pi f_o t$ and by multiplying the other message by a harmonic signal $U_2(t) = 2\sin(2\pi f_o + \pi - \Delta\varphi_o)$, and algebraic summing of the products thus obtained, to directly detect one of the modulating signals, and by multiplying one message by a harmonic signal $U_3(t) = 2\cos 2\pi f_o t$ and the other message by a harmonic signal $U_4(t) = 2\cos(2\pi f_o t + \pi - \Delta\varphi_o)$ and algebraic summing of the products thus obtained to directly detect the second modulating signal.

It is expedient, that in the method of this invention, when generating folded=band amplitude modulated signals, folded=band amplitude modulated signals with a suppressed carrier, folded=band quadrature modulated signals, folded=band angle modulated signals, modulation of the carrier frequency $f_o$ by data signals at the transmitting side be performed by at first modulating a carrier frequency $f_x$ higher than the difference between the upper and lower limiting frequencies of one unfolded sideband of the folded=band signal to generate an intermediate signal with unfolded sidebands and then translating this intermediate signal into a folded=band signal with an $f_o$ carrier frequency by heterodyne conversion.

It is also expedient, that in the method of this invention, when generating folded=band signals by folded=band amplitude modulation with or without carrier suppression and by folded=band quadrature modulation at the transmitting side, modulation by the data signal be

- 9 -

performed with a carrier frequency $f_o$ lower than the upper limiting frequency in the modulating signal spectrum.

It is also expedient, that in the method of this invention generation of folded=band angle modulated signals at the transmitting side be performed by using the data signal to modulate a carrier frequency $f_o$ higher than the upper limiting frequency in the modulating signal spectrum, but lower than the difference between the upper and lower limiting frequencies of one unfolded sideband required at the angle modulation index selected.

It is also expedient, that in the method of this invention generation of folded=band angle modulated signals at the transmitting side be performed by usign the data signal to modulate a carrier frequency $f_o$ lower than the upper limiting frequency in the modulating signal spectrum and not exceeding the carrier frequency deviation at the selected index of angle modulation.

Brief Description of the Accompanying Drawings

The invention will be described in greater detail with reference to a specific embodiment thereof and to the accompanying drawings, wherein:

Fig. 1 shows the approximate pattern of a folded= =band signal spectrum;

Fig. 2 shows the upper sideband of a folded=band signal;

Fig. 3 shows the unfolded part of the lower sideband of a folded=band signal;

Fig. 4 shows the folded part of the lower sideband of a folded=band signal;

Fig. 5 shows the functional diagram used to generate a folded=band signal by first modulating a high frequency carrier $f_x$ and then translating the resulting intermediate signal to an $f_o$ carrier frequency by heterodyne conversion, according to the invention;

Fig. 6 shows the appriximate pattern of the intermediate signal spectrum with a high carrier frequency;

Fig. 7 shows the functional diagram used to generate folded=band signals by direct modulation of a low carrier frequency $f_o$, according to the invention;

Fig. 8 shows the approximate pattern of the modulating signal spectrum;

Fig. 9 shows the functional diagram used to process a folded=band signal by sequential multiplication, according to the invention;

Fig. 10 shows the functional diagram used to process folded=band signals by its multiplication by a signal that is the algebraic sum of N harmonic signals, according to the invention;

Fig. 11 shows the functional diagram used to process folded=band signals by N independent multiplication operations, according to the invention;

Fig. 12 shows the functional diagram used to process two messages transmitted by folded=band signals, with modulating signal detection performed at a high frequency, according to the invention;

Fig. 13 shows the functional diagram used to process two messages transmitted by folded=band quadrature modulated signals at a low carrier frequency, according to the invention;

Fig. 14 shows the diagram of Fig. 13 for the case of a phase difference between the carrier frequencies in the two messages transmitted by folded=band quadrature modulated signals unequal to $\pm \pi/2$ ;

Fig. 15 shows the approximate pattern of the complex spectrum of a signal with angle modulation by a single harmonic signal.

### Preferred Embodiment

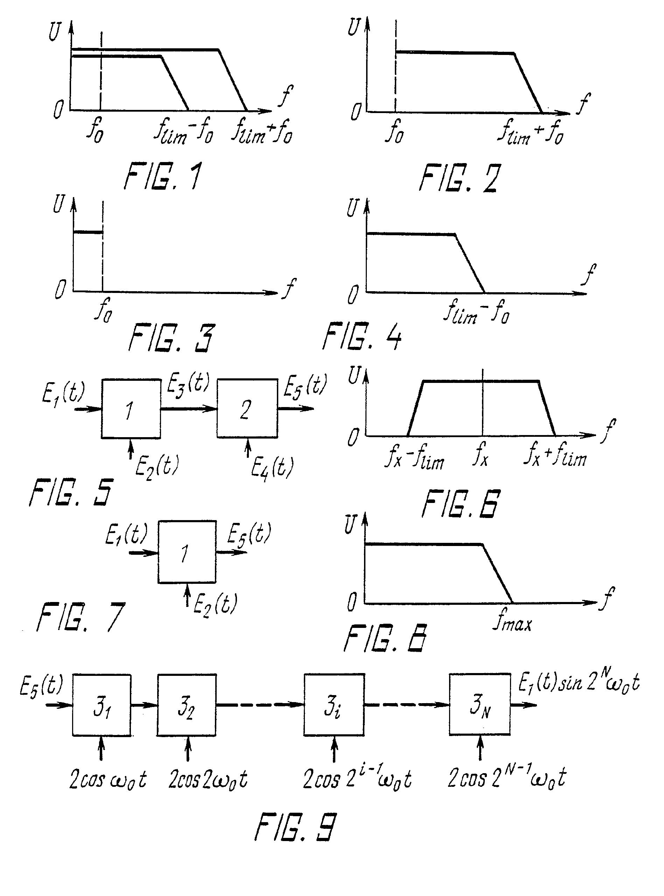

The method for folded=band signal transmission and reception of this invention is implemented as follows. A folded=band signal with the spectrum thereof (Fig. 1) containing all the frequency components of the upper sideband (Fig. 2) and lower sideband (Fig. 3), is generated at the transmitting side.

The folded=band signal is generated by modulating with a data signal, for instance a TV video signal, the carrier frequency $f_d$, which is lower than the difference between the upper limiting frequency $f_o + f_{lim}$ (Fig. 2) and the lower limiting frequency $f_o - f_{lim}$ (Figs. 3, 4) of one unfolded sideband of the folded=band signal, where $f_{lim}$ is the bandwidth of the folded=band signal sideband, since the lower limiting frequency of a TV video signal is equal to zero.

This modulation may be carried out either directly at the carrier frequency $f_o$, or by first modulating a high carrier frequency $f_x$ with the data signals.

In the latter case, this prior modulation produces an intermediate signal with unfolded sidebands, thereafter translated to the carrier frequency $f_o$ by means of heterodyne conversion, this latter implemented, for instance, with the functional diagram shown in Fig. 5, wherein the modulating data signal $E_1(t)$ arrives at one input of modulator 1, the other input whereof re-ceives a voltage $E_2(t)$. With amplitude modulation, with and without carrier suppression, $E_2(t)$ is a harmonic signal of an $f_x$ frequency, constituting the carrier fre-quency. With angle modulation $E_2(t)$ may also be, for instance, the voltage of a harmonic signal to stabilize the quiescent frequency.

With quadrature modulation, modulator 1, comprising, as is generally known, two multipliers and an adder (not shown in the drawings), receives two independent data signals and two carrier frequency voltages shifted in phase relative to one another by $\pm/2$. An intermediate signal, $E_3(t)$, with unfolded sidebands, with a spectrum pattern as shown in Fig. 6, is generated at the output of modulator 1 and passed to the first input of mixer 2 (Fig. 5), the second input whereof receives a harmonic signal $E_4(t)$ with a frequency of $f_x + f_o$ or $f_x - f_o$. As a result of heterodyne conversion, a folded=band signal $E_5(t)$ with a spectrum pattern as shown in Fig. 1 is generated at the output of mixer 2.

If fold=band modulation is performed directly, without generating the intermediate $E_3(t)$ signal, a harmonic signal voltage $E_2(t)$ with an $f_o$ frequency is applied to the second input of modulator 1, at the output whereof the folded=band signal $E_5(t)$ is directly generated as a result.

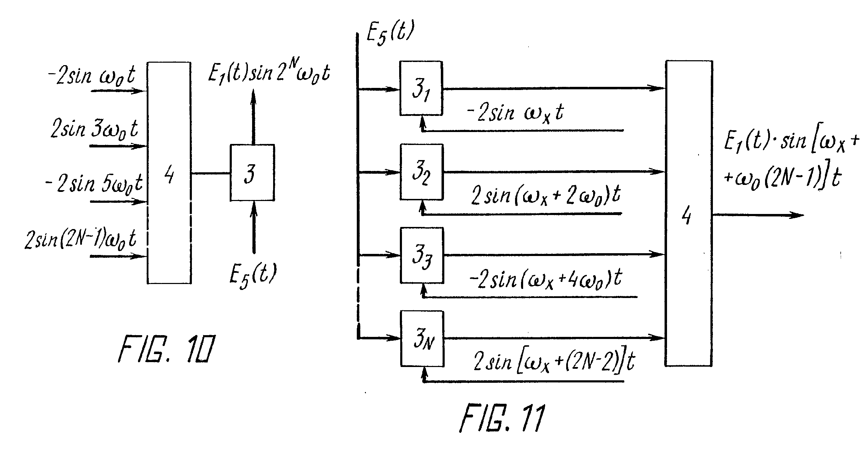

When generating amplitude modulated folded=band signals, with or without carrier suppression, or folded=band quadrature modulated signals, frequency $f_o$ is lower than the upper limiting frequency $f_{max}$ of the modulating signal spectrum (Fig. 8) and, consequently, is lower than the difference between hthe upper and lower limiting frequencies of an unfolded sideband of the folded=band signal.

When generating folded=band angle modulated sig-nyls, i.e. frequency or phase modulated folded=band signals, $f_o$ is selected to be lower than the upper li-miting frequency $f_{max}$ of the modulating signal spectrum, and also lower than the frequency deviation at the modulation index specified, and therefore lower than the difference between the upper, $f_{lim} + f_o$ (Fig. 2), and the lower, $f_o$, limiting frequencies of one unfolded sideband of the folded=band signal.

Folded=band angle modulated signal can be generated also by modulating the carrier frequency $f_o$ with the data signals, selecting $f_o$ to be higher than the upper limiting frequency $f_{max}$ (Fig. 8) of the modulating signal spectrum, but lower than the frequency deviation.

At the receiving side the folded=band signal thus generated are received and processed.

Common to processing folded=band signals generated with any kind of fold band modulation is that the received folded=band signal $E_5(t)$ is multiplied by signals which are the sum of harmonic components, the frequencies and phases whereof are selected such, that summing up the voltages generated as products of individual multiplication operations reduces the spectrum of the processed folded=band signal to a form, allowing detection therefrom of the modulating $E_1(t)$ signal with the aid of known techniques.

The specific kind of processing to be applied depends on the type of fold band modulation used to generate the folded=band signal being received. Certain groups of fold band modulation types allow processing by more than one kind of processing, as will be demonstrated strated herein below. At the same time, one and the same kind of processing may be applied to several types of fold modulation, as is also to be demonstrated herein below.

The following operations are applicable to convert the spectrum of folded=band amplitude modulated signals with or without carrier suppression into the spectrum of amplitude modulated signals, with or without carrier suppression, with unfolded sidebands.

1. Folded=band signal processing by sequential multiplication.

The functional diagram for implementing this kind of folded=band signal processing is illustrated in Fig. 9 and involves N multipliers $3_1$, $3_2$, ... $3_i$, ...$3_N$, where N is an integer, $1 = i = N$. In each multiplier $3_i$ the folded=band voltage from the output of the preceeding multiplier $3_{i-1}$ is multiplied by a harmonic signal of the form $U_i(t) = 2\cos 2^{i-1}\omega_0 t$, where $\omega_0 = 2\pi f_0$. Representing $E_5(t)$ as $E_5(t) = E_1(t)\sin \omega_0 t$ and multiplying it by $2\cos\omega_0 t$, we obtain:

- 14 -

$$E_5(t)2\cos\omega_0 t = E_1(t)\sin\omega_0 t \cdot 2\cos\omega_0 t = 0 + E_1(t)\sin 2\omega_0 t$$

$$E_1(t)\sin 2\omega_0 t \cdot 2\cos 2\omega_0 t = 0 + E_1(t)\sin 4\omega_0 t$$

$$. \quad . \quad . \quad . \quad . \quad . \quad . \quad . \quad . \quad . \quad . \quad . \quad . \quad . \quad . \quad . \quad . \quad . \quad . \quad .$$

$$E_1(t)\sin 2^{i-1}\omega_0 t \cdot 2\cos 2^{o-1}\omega_0 t = 0 + E_1(t)\sin 2^i \omega_0 t$$

$$. \quad . \quad . \quad . \quad . \quad . \quad . \quad . \quad . \quad . \quad . \quad . \quad . \quad . \quad . \quad . \quad . \quad . \quad . \quad .$$

$$E_1(t)\sin 2^{N-1}\omega_0 t = 0 + E_1(t)\sin 2^N \omega_0 t \ .$$

Consequently, a signal $E_1(t)\sin 2^N\omega_0 t$ is generated at the output of multiplier $3_N$, representing the modulated signal with unfolded sidebands, because the converted carrier frequency is $2^N\omega_0/2\pi$ or $2^N f_0$, i.e. equal to greater than $f_{max}$ in the modulating signal spectrum; the spectrum pattern of this signal at $f_x = 2^N f_0$ is shown in Fig. 6. Thereafter this signal is detected using generally known techniques.

As an exampoe, consider folded=band signal spectrum conversion at tne output of multiplier $3_1$. The modulating signal $E_1(t)$ is:

$$E_1(t) = \frac{1}{\pi}\int_0^{\omega_{max}} A(\omega)\cos[\omega t + \varphi(\omega)]\,d\omega,$$

where $A(\omega)$ and $\varphi(\omega)$ are the amplitude and phase spectra of the signal, $\omega_{max} = 2\pi f_{max}$ .

At $\omega_0 < \omega_{max}$ (the case of fold band modulation with carrier suppression):

$$E_5(t) = 2E_1(t)\cos\omega_0 t = \frac{1}{\pi}\int_0^{\omega_{max}} A(\omega)\cos[(\omega+\omega_0)t +$$

$$+\varphi(\omega)]\,d\omega + \frac{1}{\pi}\int_0^{\omega_0} A(\omega)\cos[(\omega_0-\omega)t - \varphi(\omega)]\,d\omega +$$

$$+ \frac{1}{\pi}\int_{\omega_{max}}^{\ } A(\omega)\cos[(\omega-\omega_0)t + \varphi(\omega)]\,d\omega .$$

The voltage at the output of multiplier $3_1$ will be:

$$2E_1(t)\cos\omega_0 t \cdot \sin\omega_0 t = E_1(t)\sin 2\omega_0 t =$$

$$= \frac{1}{\pi}\int_0^{\omega_{max}} A(\omega)\sin[(\omega+\omega_0)t + \varphi(\omega)]\,d\omega - \frac{1}{\pi}\int_0^{\omega_{max}} A(\omega)\sin$$

$$[\omega t + \varphi(\omega)]\,d\omega + \frac{1}{\pi}\int_0^{\omega_0} A(\omega)\sin[(2\omega_0 - \omega)t - \varphi(\omega)]\,d\omega +$$

- 15 -

$$+ \frac{1}{\pi} \int_0^{\omega_0} A(\omega)\sin[\omega t + \varphi(\omega)]\, d\omega + \frac{1}{\pi} \int_0^{\omega_{max}} A(\omega)\sin[\omega t + \varphi(\omega)]\, d\omega +$$

$$+ \frac{1}{\pi} \int_0^{\omega_{max}} A(\omega)\sin[(2\omega_0 - \omega)t - \varphi(\omega)]\, d\omega =$$

$$= \frac{1}{\pi} \int_0^{\omega_{max}} A(\omega)\sin[(\omega + 2\omega_0)t + \varphi(\omega)]\, d\omega +$$

$$+ \frac{1}{\pi} \int_0^{\omega_0} A(\omega)\sin[(2\omega_0 - \omega)t - \varphi(\omega)]\, d\omega +$$

$$+ \frac{1}{\pi} \int_{\omega_0}^{2\omega_0} A(\omega)\sin[(2\omega_0 - \omega)t - \varphi(\omega)]\, d\omega -$$

$$- \frac{1}{\pi} \int_{2\omega_0}^{\omega_{max}} A(\omega)\sin[(\omega - 2\omega_0)t + \varphi(\omega)]\, d\omega =$$

$$= \frac{1}{\pi} \int_0^{\omega_{max}} A(\omega)\sin[(\omega + 2\omega_0)t + \varphi(\omega)]\, d\omega +$$

$$+ \frac{1}{\pi} \int_0^{2\omega_0} A(\omega)\sin[(2\omega_0 - \omega)t - \varphi(\omega)]\, d\omega -$$

$$- \frac{1}{\pi} \int_{2\omega_0}^{\omega_{max}} A(\omega)\sin[(\omega - 2\omega_0)t + \varphi(\omega)]\, d\omega.$$

As follows from the above equation, multiplication is accompanied by summing of the voltages of individual frequency spectrum components, with one group of summands gives a zero sum and the other group of summands giving an effective value.

Conversion of the folded=band signal spectrum in subsequent multipliers is similar to that treated herein above for the first multiplier, so that in each multiplier $3_i$ the carrier frequency $f_0$ is doubled, resulting in a completely unfolded spectrum at $2^N \omega_0 \geqslant \omega_{max}$.

2. Processing folded=band signals by multiplying by a sum of harmonic signals.

As in the described herein above case, processing of the received folded=band signals is performed by converting the folded=band carrier frequency $f_0$. This is achieved by multiplying the folded band signal $E_5(t)$ by a signal of the form:

$$U(t) = \sum_{i=1}^{N} (-1)^i \sin(2i-1)\omega_0 t,$$

— 16 —

this representing a sum of harmonic signals.

Conversion of this kind can be carried out with the functional diagram shown in Fig.10, wherein each i=th input of adder 4 receives a harmonic signal $(-1)^i$ $(-1)^i \sin(2i-1)_o t$, with the above cited summary signal generated at adder 4 output and passed to an input of multiplier 3, the other input whereof receives the folded=band signal $E_5(t)$. Multiplier 3 provides their multiplication:

$$2E_5(t) \cdot U(t) = E_1(t) \cos\omega_o t \sum_{i=1}^{N} (-1)^i \sin(2i-1)\omega_o t =$$

$$= E_1(t) \sin 2N\omega_o t \ .$$

Simultaneously, multiplier 3 provides summing of the frequency components as well, as follows from the preceeding equation.

Since the converted carrier frequency $f_o 2^N = 2^N \omega_o / 2\pi$ is higher than the upper limiting frequency $f_{max}$ of the spectrum of the modulating signal $E_1(t)$, both sidebands of the modulated signal are unfolded at a frequency $f_o 2^N$ (as in the herein above "Example" of sequential multiplication) and it can be detected with the aid of known techniques.

3. Folded=band signal processing by N independent multiplication operations.

At the receiving side folded band amplitude modulated signals, with and without carrier suppression, are processed by converting the carrier frequency, $f_o$, of the folded=band signal by N independent multiplication operations of the $E_5(t)$ folded=band signal by a harmonic signal of the form:

$$U_i(t) = (-1)^i \sin[\omega_x + \omega_o(2i-2)] t,$$

where $\omega_x = 2\pi f_x \geq \omega_o = 2\pi f_o$. This operation is carried out with the aid of the functional diagram shown in Fig.11, wherein the first N inputs of multipliers $3_1$ to $3_N$ receive the folded=band signal $E_5(t)$ and the second inputs of these multipliers $3_1$ to $3_N$ receive corresponding harmonic signals $U_1 = -\sin\omega_x t$, $U_2(t)$, ..., $U_N(t)$, of the $U_1(t)$ form cited herein above.

The output voltage of each multiplier $3_i$ is:

$$2E_5(t)\cdot U_i(t) = 2E_1(t)\cos\omega_0 t\cdot(-1)^i\sin\left[\omega_x+\omega_0(2i-2)\right]t =$$
$$=2E_1(t)\cdot(-1)^i\sin\left[\omega_x +\omega_0(2i-3)\right]t + 2E_1(t)(-1)^i\sin\left[\omega_x+\omega_0(2i-1)\right]t.$$

These N output voltages of multipliers $3_1$ to $3_N$ are summed by adder 4, resulting in:

$$2E_5(t)\cdot U_i(t) = 2E_1(t)\cos\omega_0 t\cdot(-1)^i\sin\left[\omega_x+\omega_0(2i-2)\right]t =$$
$$= 2E_1(t)(-1)^i\sin\left[\omega_x +\omega_0(2i - 3)\right]t + 2E_1(t)(-1)^i\sin\left[\omega_x+\omega_0(2i - 1)\right]t.$$

The N output voltages of multipliers $3_1$ to $3_N$ are summed up by adder 4, this yielding:

$$E_5(t)\cdot U_1(t) = E_1(t)\left[-\sin(\omega_x -\omega_0)t - \sin(\omega_x +\omega_0)t\right]$$
$$E_5(t)\cdot U_2(t) = E_1(t)\left[\sin(\omega_x +\omega_0)t + \sin(\omega_x +3\omega_0)t\right]$$
$$E_5(t)\cdot U_3(t) = E_1(t)\left[-\sin(\omega_x + 3\omega_0)t - \sin(\omega_x + 5\omega_0)t\right]$$

$+ \cdots\cdots\cdots\cdots\cdots\cdots\cdots\cdots\cdots\cdots$

$$E_5(t)\cdot U_{N-1}(t) = E_1(t)\{(-1)^{N-1}\sin\left[\omega_x - (2N-5)\omega_0\right]t\} +$$
$$+ E_1(t)\{(-1)^{N-1}\sin\left[\omega_x+(2N -3)\omega_0\right]t\}$$
$$E_5(t)\cdot U_N(t) = E_1(t)\{(-1)^N\sin\left[\omega_x + (2N-3)\omega_0\right]t\} +$$
$$+ E_1(t)\{(-1)^N\sin\left[\omega_x+(2N-1)\omega_0\right]t\}$$

---

$$= E_1(t)(-1)^N\sin\left[\omega_x+(2N-1)\omega_0\right]t$$

Multiplications and summing thus unfold the spectrum of a folded=band signal, yielding the modulating signal with unfolded sidebands, at a carrier frequency $f_x+f_0(2^N-1)$ exceeding the frequency $f_x-f_0$ by more than the upper limiting frequency $f_{max}$ in the modulating signal spectrum, and therefore allow its detection by known techniques.

All three herein above cited techniques for processing folded=band signals allow reduction of the folded=band signal spectrum to the cited above form with unfolded sidebands, this allowing detection of the modulating signal, i.e. of the useful data, out of the processed folded=band signal with the aid of known techniques.

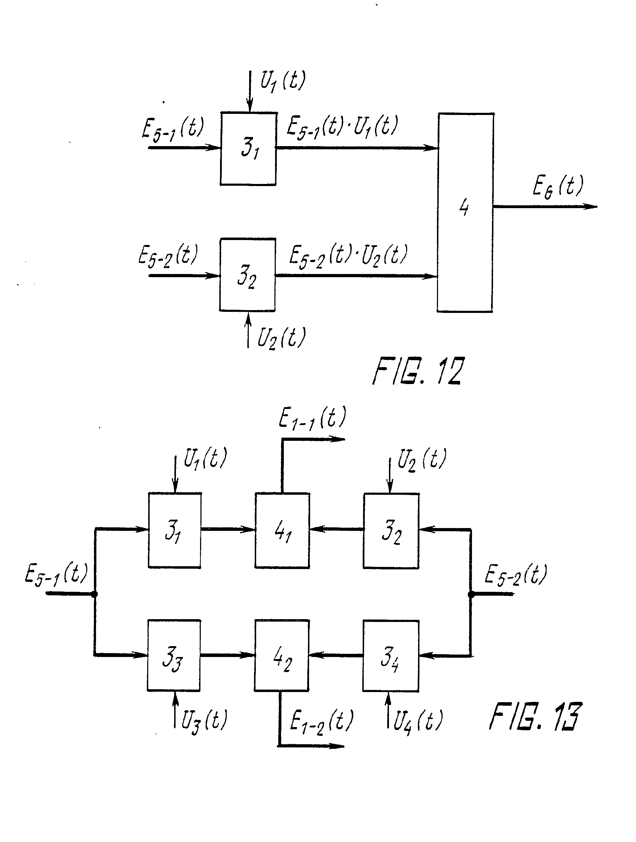

When treating folded=band quadrature modulated signals, two received messages are processed conjointly; the carrier frequencies of these messages are shifted in phase from one another by $\Delta\varphi_0 \neq \pm K\pi$, where $K$ is an integer. The functional diagram to implement such processing is illustrated in Fig. 12, wherein the inputs of multipliers $3_1$ and $3_2$ receive messages of folded=band quadrature modulated signals, for instance such as:

$$E_{5-1}(t) = E_{1-1}(t)\cos\omega_0 t + E_{1-2}(t)\sin\omega_0 t \quad \text{and}$$
$$E_{5-2}(t) = E_{1-1}(t)\cos(\omega_0 + \Delta\varphi_0) + E_{1-2}(t)\sin(\omega_0 t + \Delta\varphi_0),$$

where $E_{1-1}(t)$ is the first information signal and $E_{1-2}(t)$ is the second information signal, applied at the transmitting side to the input of modulator 1 (Fig. 5), and $\omega_0 = 2\pi f_0$.

The second input of multiplier $3_1$ (Fig. 12) is driven by a harmonic signal $U_1(t) = 2\cos\omega_x t$, and the second input of multiplier $3_2$ receives a harmonic signal $U_2(t) = 2\cos(\omega_x t + \pi - \Delta\varphi_0)$.

Both harmonic signals feature an identical frequency $\omega_x$ which is higher than the upper limiting frequency $f_0 + f_{lim}$ in the folded=band signal spectrum, and the phase shift between these two harmonic signals is $\pi - \Delta\varphi_0$.

The output voltage of multiplier $3_1$ is:

$$E_{5-1}(t)\cdot U_1(t) = E_{1-1}\left[\cos(\omega_x - \omega_0)t + \cos(\omega_x + \omega_0)t\right] +$$
$$+ E_{1-2}(t)\left[-\sin(\omega_x - \omega_0)t + \sin(\omega_x - \omega_0)t\right]$$

Multiplier $3_2$ generates an output voltage:

$$E_{5-2}(t)\cdot U_2(t) = E_{1-1}(t)\left[\cos(\omega_x t - \omega_0 t + \pi + 2\Delta\varphi_0) +\right.$$
$$+ \cos(\omega_x t + \omega_0 t + \pi) + E_{1-2}(t)\left[\sin(\omega_x t -\right.$$
$$\left.-\omega_0 t + \pi - 2\Delta\varphi_0) + \sin(\omega_x t + \omega_0 t + \pi)\right].$$

The output voltages from multipliers $3_1$ and $3_2$ are passed to the inputs of adder 4, wherein they are algebraically summed up, this resulting in an adder 4 output voltage:

$$E_6(t) = E_{5-1}(t) \cdot U_1(t) + E_{5-2}(t) \cdot U_2(t) = 2E_{1-1}(t)\cos\left[(\omega_x - \omega_0)t + \frac{\pi}{2} - \Delta\varphi_0\right]\cos\left(\frac{\pi}{2} - \Delta\varphi_0\right) - 2E_{1-2}(t)\sin\left[(\omega_x - \omega_0)t + \frac{\pi}{2} - \Delta\varphi_0\right)\right]\cos\left(\frac{\pi}{2} - \Delta\varphi_0\right).$$

Thus, the modulating signal with unfolded sidebands is generated with a high carrier frequency $f_x - f_0 = (\omega_x - \omega_0)/2\pi$, for subsequent detection by known techniques.

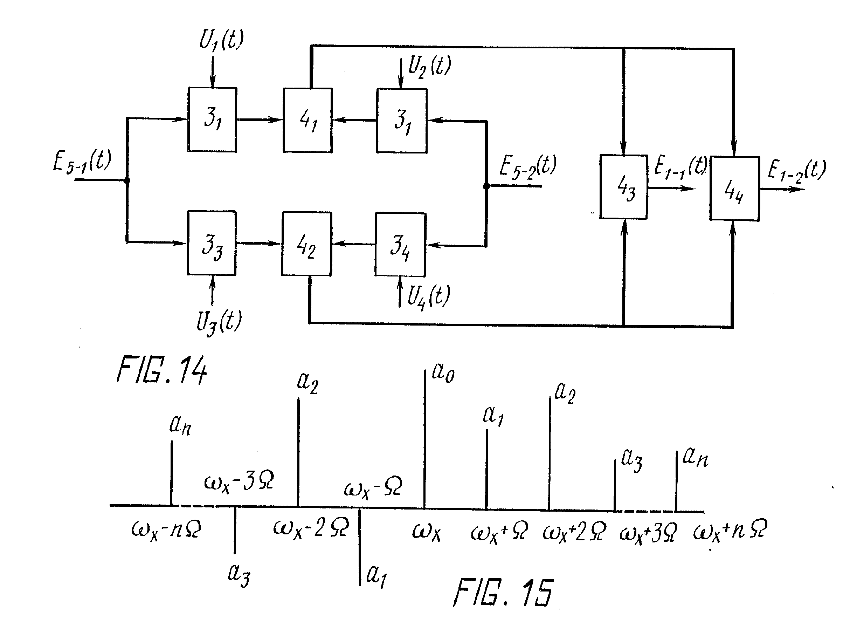

Conjoint processing of two messages of folded=band quadrature modulated signals, the phase shift between the carrier frequencies whereof is $\Delta\varphi_0 \neq K$, may also be executed directly at $f_x = f_0$, using the functional diagram shown in Fig. 13. The first folded=band signal message $E_{5-1}(t)$ is applied to the first inputs of multi-pliers $3_1$ and $3_2$, the second folded=band signal message $E_{5-2}(t)$ is applied to the first inputs of multipliers $3_2$ and $3_4$. The second inputs of multipliers $3_1$, $3_2$, $3_3$, $3_4$ receive harmonic signals

$$U_1(t) = 2\sin 2\pi f_0 t; \quad U_2(t) = 2\sin(2\pi f_0 t + \pi - \Delta\varphi_0);$$
$$U_3(t) = 2\cos 2\pi f_0 t; \quad U_4(t) = 2\cos(2\pi f_0 t + \pi - \Delta\varphi_0),$$

respectively. Multiplier $3_1$ generates an output voltage

$$E_{5-1}(t)U_1(t) = E_{5-1}(t)2\sin\omega_0 t = E_{1-1}(t)\sin 2\omega_0 t + E_{1-2}(t) - E_{1-2}(t)\cos 2\omega_0 t.$$

The output voltage of multiplier $3_2$ will be:

$$E_{5-2}(t)U_2(t) = E_{5-2}(t)2\sin(2\pi f_0 + \pi - \Delta\varphi_0) = E_{1-1}(t)\sin(\pi - 2\Delta\varphi_0) + E_{1-1}(t)\sin(2\omega_0 t + \pi) + E_{1-2}(t)\cos(\pi - 2\Delta\varphi_0) - E_{1-2}(t)\cos(2\omega_0 t + \pi).$$

The products generated by multipliers $3_1$ and $3_2$ are algebraically summed in adder $4_1$ yielding:

$$E_{1-2}(t)\cos(\pi - 2\Delta\varphi_0) + E_{1-i}(t)\sin(\pi - 2\Delta\varphi_0),$$

i.e. reproducing the $E_{1-2}(t)$ modulating signal at $\Delta\varphi_0 = \pi/2$, because $\cos(\pi - 2\pi/2) = 1$ and $\sin(\pi - 2\pi/2) = 0$.

Multiplier $3_3$ generates an output voltage:

$$E_{5-1}(t)U_3(t) = E_{1-1}(t) + E_{1-1}(t)\cos 2\omega_0 t + E_{1-2}(t)\sin 2\omega_0 t$$

and the output voltage of multiplier $3_4$ will consitute:

$$E_{5-2}(t)U_4(t) = E_{1-1}(t)\cos(\pi - 2\Delta\varphi_o) + E_{1-1}(t)\cos(2\omega_o t + \pi) -$$
$$- E_{1-2}(t)\sin(\pi - 2\Delta\varphi_o) + E_{1-2}(t)\sin(2\omega_o t + \pi).$$

The output signals of multipliers $3_3$ and $3_4$ are algebraically summed in adder $4_2$, yielding:

$$E_{1-1}(t)\cos(\pi - 2\Delta\varphi_o) - E_{1-2}(t)\sin(\pi - 2\Delta\varphi_o),$$

directly representing second modulating signal $E_{1-1}(t)$ at $\Delta\varphi_o = \pi/2$.

In case of $\Delta\varphi_o$ differing from $\pi/2$, the output signals of adders $4_1$ and $4_2$ are additionally summed in supplementary adders $4_3$ (Fig. 14) and $4_4$. Thus, in this case the operations of processing folded=band signals and modulating signal detection are overlapped.

Received folded=band angle modulated signals may be processed as described herein above with reference to Fig. 12 for the case of processing quadrature modulated signals. In this case two received messages of folded=band angle modulated signals are processed conjointly, with their carrier frequencies differing in phase by $\Delta\varphi_o \neq K\pi$. The mathematical description of the frequency and phase spectra of angle modulated signals is rather cumbersome (Ed. K.A.Samoylo, "Radiotekhnicheskie tsepi i signali" ("Radio engineering circuits and signals"), 1982, Radio i Svyaz Publishers (Moscow), pp. 94 = 101. - In Russian), a simplified description of the processes taking place shall be presented. Fig. 15 shows the complex spectrum pattern of angle modulated signals for the case of modulation by a single harmonic signals with an frequency.

In such a spectrum the amplitude of the n=th sideband component is $a_n = U_o I_n(m)$, where $I_n(m)$ is the Bessel function of the first kind and the n=th order of the modulation index m and $U_o$ is the amplitude of the modulating signal.

Odd upper and lower sideband components are in antiphase, with inphase even components.

The first input of multiplier $3_1$ receives the folded=band signal $E_{5-1}(t)$ with the second input thereof driven by a harmonic signal $U_1(t) = 2\sin\omega_x t$. Their product, $E_{5-1}(t)U_1(t)$, is generated at the output of multiplier $3_1$. Similarly, the inputs of multiplier $3_2$ receive the folded=band signal $E_{5-2}(t)$ and a harmonic signal $U_2(t) = 2\sin(\omega_x t + \pi - \Delta\varphi_0)$, respectively, with their product, $E_{5-2}(t)U_2(t)$, generated at multiplier $3_2$ output.

The output voltages of multipliers $3_1$ and $3_2$ are passed to the inputs of adder 4. We shall consider this process in greater detail.

Folded=band signal at the input of multiplier $3_1$:

Folded=band signal at the input of multiplier $3_2$:

$$E_{5-1}\,t =$$
$$= (-1)^n\, a_n \sin(\omega_0 - n\,\Omega)t$$

$$\ldots$$

$$+ a_4 \sin(\omega_0 - 4\,\Omega)t$$
$$- a_3 \sin(\omega_0 - 3\,\Omega)t$$
$$+ a_2 \sin(\omega_0 - 2\,\Omega)t$$
$$- a_1 \sin(\omega_0 - \Omega)t$$
$$+ a_0 \sin \omega_0 t$$
$$+ a_1 \sin(\omega_0 + \Omega)t$$
$$+ a_2 \sin(\omega_0 + 2\,\Omega)t$$
$$+ a_3 \sin(\omega_0 + 3\,\Omega)t$$
$$+ a_4 \sin(\omega_0 + 4\,\Omega)t$$

$$\ldots$$

$$+ a_n \sin(\omega_0 + n\,\Omega)t$$

$$E_{5-2}\,t =$$
$$= (-1)^n\, a_n \sin\left[(\omega_0 - n\,\Omega)t + \Delta\varphi_0\right]$$

$$\ldots$$

$$+ a_4 \sin\left[(\omega_0 - 4\,\Omega)t + \Delta\varphi_0\right]$$
$$- a_3 \sin\left[(\omega_0 - 3\,\Omega)t + \Delta\varphi_0\right]$$
$$+ a_2 \sin\left[(\omega_0 - 2\,\Omega)t + \Delta\varphi_0\right]$$
$$- a_1 \sin\left[(\omega_0 - \Omega)t + \Delta\varphi_0\right]$$
$$+ a_0 \sin(\omega_0 t + \Delta\varphi_0)$$
$$+ a_1 \sin\left[(\omega_0 + \Omega)t + \Delta\varphi_0\right]$$
$$+ a_2 \sin\left[(\omega_0 + 2\,\Omega)t + \Delta\varphi_0\right]$$
$$+ a_3 \sin\left[(\omega_0 + 3\,\Omega)t + \Delta\varphi_0\right]$$
$$+ a_4 \sin\left[(\omega_0 + 4\,\Omega)t + \Delta\varphi_0\right]$$

$$\ldots$$

$$+ a_n \sin\left[(\omega_0 + n\,\Omega)t + \Delta\varphi_0\right]$$

Multiplier $3_1$ output voltage:

Multiplier $3_2$ output voltage:

$$E_{5-1}(t) \cdot U_1(t) = E_{5-1}(t)\, 2\sin \omega_x t =$$

$$= (-1)^n a_n \cos\left[(\omega_x - \omega_0)t + n\Omega t\right]$$

$$- (-1)^n a_n \cos\left[(\omega_x + \omega_0)t - n\Omega t\right]$$

$$\cdot \quad \cdot \quad \cdot \quad \cdot \quad \cdot$$

$$+ a_4 \cos\left[(\omega_x - \omega_0)t + 4\Omega t\right]$$

$$- a_4 \cos\left[(\omega_x + \omega_0)t - 4\Omega t\right]$$

$$- a_3 \cos\left[(\omega_x - \omega_0)t + 3\Omega t\right]$$

$$+ a_3 \cos\left[(\omega_x + \omega_0)t - 3\Omega t\right]$$

$$+ a_2 \cos\left[(\omega_x - \omega_0)t + 2\Omega t\right]$$

$$- a_2 \cos\left[(\omega_x + \omega_0)t - 2\Omega t\right]$$

$$- a_1 \cos\left[(\omega_x - \omega_0)t + \Omega t\right]$$

$$+ a_1 \cos\left[(\omega_x + \omega_0)t - \Omega t\right]$$

$$+ a_0 \cos(\omega_x - \omega_0)t$$

$$- a_0 \cos(\omega_x + \omega_0)t$$

$$+ a_1 \cos\left[(\omega_x - \omega_0)t - \Omega t\right]$$

$$E_{5-2}(t) \cdot U_2(t) = E_{5-2}(t) \cdot 2\sin\left(\omega_x t + \pi - \Delta\varphi_0\right) =$$

$$= (-1)^n a_n \cos\left[(\omega_x - \omega_0) + \pi - 2\Delta\varphi_0 + n\Omega t\right]$$

$$- (-1)^n a_n \cos\left[(\omega_x + \omega_0) + \pi - n\Omega t\right]$$

$$\cdot \quad \cdot \quad \cdot \quad \cdot \quad \cdot \quad \cdot \quad \cdot$$

$$+ a_4 \cos\left[(\omega_x - \omega_0) + \pi - 2\Delta\varphi_0 + 4\Omega t\right]$$

$$- a_4 \cos\left[(\omega_x + \omega_0) + \pi - 4\Omega t\right]$$

$$- a_3 \cos\left[(\omega_x - \omega_0) + \pi - 2\Delta\varphi_0 + 3\Omega t\right]$$

$$+ a_3 \cos\left[(\omega_x + \omega_0) + \pi - 3\Omega t\right]$$

$$+ a_2 \cos\left[(\omega_x - \omega_0) + \pi - 2\Delta\varphi_0 + 2\Omega t\right]$$

$$- a_2 \cos\left[(\omega_x + \omega_0) + \pi - 2\Omega t\right]$$

$$- a_1 \cos\left[(\omega_x - \omega_0) + \pi - 2\Delta\varphi_0 + \Omega t\right]$$

$$+ a_1 \cos\left[(\omega_x + \omega_0)t + \pi - \Omega t\right]$$

$$+ a_0 \cos\left[(\omega_x - \omega_0)t + \pi - 2\Delta\varphi_0\right]$$

$$- a_0 \cos\left[(\omega_x + \omega_0)t + \pi\right]$$

$$+ a_1 \cos\left[(\omega_x - \omega_0)t + \pi - 2\Delta\varphi_0 - \Omega t\right]$$

$$-\alpha_1 \cos\left[(\omega_x + \omega_0)t + \Omega t\right]$$

$$+\alpha_2 \cos\left[(\omega_x - \omega_0)t - 2\Omega t\right]$$

$$-\alpha_2 \cos\left[(\omega_x + \omega_0)t + 2\Omega t\right]$$

$$+\alpha_3 \cos\left[(\omega_x - \omega_0)t - 3\Omega t\right]$$

$$-\alpha_3 \cos\left[(\omega_x + \omega_0)t + 3\Omega t\right]$$

$$+\alpha_4 \cos\left[(\omega_x - \omega_0)t - 4\Omega t\right]$$

$$-\alpha_4 \cos\left[(\omega_x + \omega_0)t + 4\Omega t\right]$$

$$\cdots$$

$$+\alpha_n \cos\left[(\omega_x - \omega_0)t - n\Omega t\right]$$

$$-\alpha_n \cos\left[(\omega_x + \omega_0)t + n\Omega t\right]$$

$$-\alpha_1 \cos\left[(\omega_x + \omega_0)t + \pi + \Omega t\right]$$

$$+\alpha_2 \cos\left[(\omega_x - \omega_0)t + \pi - 2\Delta\varphi_0 - 2\Omega t\right]$$

$$-\alpha_2 \cos\left[(\omega_x + \omega_0)t + \pi + 2\Omega t\right]$$

$$+\alpha_3 \cos\left[(\omega_x - \omega_0)t + \pi - 2\Delta\varphi_0 - 3\Omega t\right]$$

$$-\alpha_3 \cos\left[(\omega_x + \omega_0)t + \pi + 3\Omega t\right]$$

$$+\alpha_4 \cos\left[(\omega_x - \omega_0)t + \pi - 2\Delta\varphi_0 - 4\Omega t\right]$$

$$-\alpha_4 \cos\left[(\omega_x + \omega_0)t + \pi + 4\Omega t\right]$$

$$\cdots$$

$$+\alpha_n \cos\left[(\omega_x - \omega_0)t + \pi - 2\Delta\varphi_0 - n\Omega t\right]$$

$$-\alpha_n \cos\left[(\omega_x + \omega_0)t + \pi + n\Omega t\right]$$

Adder 4 output signal:

$$\frac{1}{2\cos(\frac{\pi}{2} - \Delta\varphi_0)} \left[E_{5-1}(t)\cdot U_1(t) + E_{5-2}(t)\cdot U_2(t)\right] =$$

$$= (-1)^n \alpha_n \cos\left[(\omega_x - \omega_0)t + \frac{\pi}{2} - \Delta\varphi_0 - n\Omega t\right]$$

$$\cdots$$

$$+\alpha_4 \cos\left[(\omega_x - \omega_0)t + \frac{\pi}{2} - \Delta\varphi_0 - 4\Omega t\right]$$

$$-\alpha_3 \cos\left[(\omega_x - \omega_0)t + \frac{\pi}{2} - \Delta\varphi_0 - 3\Omega t\right]$$

$$+\alpha_2 \cos\left[(\omega_x - \omega_0)t + \frac{\pi}{2} - \Delta\varphi_0 - 2\Omega t\right]$$

$$-\alpha_1 \cos\left[(\omega_x - \omega_0)t + \frac{\pi}{2} - \Delta\varphi_0 - \Omega t\right]$$

$$+\alpha_0 \cos\left[(\omega_x - \omega_0)t + \frac{\pi}{2} - \Delta\varphi_0\right]$$

$$+\alpha_1 \cos\left[(\omega_x - \omega_0)t + \frac{\pi}{2} - \Delta\varphi_0 + \Omega t\right]$$

$$+ a_2 \cos\left[(\omega_x - \omega_o)t + \frac{\pi}{2} - \Delta\varphi_o + 2\,\Omega t\right]$$

$$+ a_3 \cos\left[(\omega_x - \omega_o)t + \frac{\pi}{2} - \Delta\varphi_o + 3\,\Omega t\right]$$

$$+ a_4 \cos\left[(\omega_x - \omega_o)t + \frac{\pi}{2} - \Delta\varphi_o + 4\,\Omega t\right]$$

$$+ a_n \cos\left[(\omega_x - \omega_o)t + \frac{\pi}{2} - \Delta\varphi_o + n\,\Omega t\right]$$

The spectrum of the signal arrived at is similar to that of an angle modulated signal with a high carrier frequency (Fig. 15), the only difference being in that the frequency shift by $\omega_o$ and the phase shift by $\frac{\pi}{2} - \Delta\varphi_o$, i.e. the folded=band angle modulated signal has been converted into an angle modulated signal with a high carrier frequency, which is then detected by known techniques to obtain the modulating signal.

The method for folded=band signal transmission and reception of this invention features a number of advantages over known in communications technology methods of data transmission and reception.

Thus, as compared to known methods of transmission and reception of wideband signals with a relatively low carrier frequency and partially suppressed lower sideband (known in the art as single=sideband transmission and single=sideband modulation), band folding modulation allows the use of a carrier frequency, several orders of magnitude lower than the difference between the upper and lower limiting frequencies of one sideband.

Practical implementation, generation and reception of folded=band signals modulated by wideband signals with spectra containing "zero" frequencies, does not encounter technical obstacles of the same magnitude, as does generation and reception of single=sideband signals.

Due to the presence of frequency components of both the upper and lower sidebands in the folded=band signal spectrum, it is free of the quadrature component, inherent in single=sideband signals, and therefore the phase error in the restored carrier frequency of folded= =band signals does not result in distortions during modulating signal detection, in contrast to what takes place in this case in single=sideband signal reception.

- 26 -

Hurthermore, Heretofore no methods for simultaneous transmission of two signals (quadrature modulated signals) with a relatively low carrier frequency and angle modulated signals were known, these types of modulation forbidding even partial sideband suppression.

As compared to quadrature and angle modulated signals with a high carrier frequency, folded=band signals are advantageous in that the bandwidth occupied in a communications channel is practically equal to that of one sideband.

This is achieved by trading off the bandwidth for transmission time. Though theoretically possible, a complete tradeoff of bandwidth for transmission time in the case of wideband quadrature or angle modulated signals with a high carrier frequency is not practically feasible due to the impossibility of embodying filters with infinitely steep or almost infinitely steep cutoff of their frequency response.

As a rule, using quadrature modulated signals with a carrier frequency equal to or slightly above the difference between the upper and lower limiting frequencies is hampered by interference to its reception and demodulation, caused by phase distortions within the modulated signal bandwidth, and therefore transmissions with this kind of modulation are avoided. On the contrary, in band folding quadrature modulation and band folding angle modulation irregularities of the phase response practically identically affect the upper and lower sidebands, especially at a low carrier frequency, i.e. no cross=modulation distortions are generated during folded=band quadrature signals demodulation and no distortions accompany demodulation of folded=band angle modulated signals.

As is known, cross=modulation distortions between modulating signals in quadrature modulation, and also distortions of detected angle modulated signals with a high carrier frequency, arrise from irregularities of the amplitude=frequency response characteristic of the communications channel leading to spurious suppression of one sideband.

In transmission of folded=band quadrature and angle modulated signals with a low carrier frequency, irregularities in the communications channel amplitude= =frequency response can practically result only in identical limiting of both the upper and lower sidebands, this being equivalent to symmetric limiting of the sidebands of quadrature modulated and angle modulated signals with a high carrier frequency. Such limiting does not impede complete separation of quadrature modulated signals and causes lower distortions in angle modulated signals.

The interference immunity of folded=band signal transmission is not inferior to that of video signal or suppressed carrier signal double=sideband transmission at a high carrier frequency. For instance, with quadrature modulation of a high carrier frequency

$$a(t)\cos\omega_x t + b(t)\sin\omega_x t + (2P_N)^{1/2}\cos(\omega_x t + \psi_N),$$

where $a(t)$ and $b(t)$ are the modulating signals, each featuring a $\Delta f$ bandwidth, $P_N$ is white noise power in a $\Delta f$ bandwidth, $\omega_x = 2\pi f_x$, $f_x$ is the high carrier frequency, and $\psi_N$ is the noise phase.

The bandwidth of a communications channel transmitting such a quadrature modulated signal is $f_x \pm \Delta f$, with a white noise power of $2P_N$ within this bandwidth.

Synchronous detection of the $a(t)$ modulating signal produces a signal at the output of the low=pass filter following the synchronous detector equal to

$$a + (2P_N)^{1/2}\cos\psi_N;$$

since, in the general case, $\psi_N$ is assumed to be $\pi/4$, $\cos\psi_N = 0.707$ and the signal--=to=noise ratio at the output of the low-pass filter in the signal demodulator path will constitute $a(t)/P_N^{1/2}$ .

With band folding quadrature modulation of a low carrier frequency $f_o \ll \Delta f$ the passband of the communications channel is about $\Delta f$.

The first folded-band signal message and the noise in this communications channel are:
$$a(t)\cos\omega_o t + b(t)\sin\omega_o t + P_N^{1/2} ,$$
where $\omega_o = 2\pi f_o$ , the second folded-band signal message and noise in this communications channel are:
$$a(t)\sin\omega_o t + b(t)\cos\omega_o t + P_N^{1/2} ,$$
wherein the noise voltages of the first and second messages are statistically independent.

The signal and noise voltages in the $a(t)$ signal detection path are:
$$a(t) + P_N^{1/2}\cos\omega_o t - P_N^{1/2}\sin\omega_o t = a(t)+(2P_N)^{1/2}\sin(\omega_o t+\Psi_N),$$
so that the noise power in this path is
$$2P_N \frac{2}{\pi} \int_0^{\pi/2} \cos^2(\omega_o t + \Psi_N)d\Psi = P_N.$$
and the signal-to-noise ratio is $a(t)P_N^{1/2}$ .

Thus, the advantages of the method for folded-band signal transmission and reception of this invention do not entail a reduced interference immunity.

Industrial Applicability

At present, it is rather difficult to enumerate all the potential fields of application of this method for folded-band signals transmission and reception in diverse communications systems.

The most obvious application appears to be wideband signal transmission via video frequency channels with a high level of low frequency interference, including mains frequency hum, and also simultaneous transmission of folded-band signals and low frequency hardware supply voltages (long-distance trunk lines). In such cases, application of the method of this invention allows

- 29 -

excluding zero frequencies in the signal at the transmitting side and effective low=frequency interference suppression at the receiving side with the aid of filtering.

Another potential area of applications is in integrated communications systems, comprising consecutive radio=frequency, video=frequency and optical fiber links, wherein application of the method of this invention allows avoiding repeated intermediate demodulation and modulation operations and thus, consequenly, excludes data signal distortions introduced by these operations.

Yet another application area of the method for folded=band signal transmission and reception of this invention is generation of complex multifunctional signals in diverse radio engineering and TV systems, for instance in colour TV, stereo colour TV and high resolution TV systems.

- 30 -

C L A I M S :

1. A method for folded=band signal transmission and reception, c h a r a c t e r i z e d   b y   t h a t at the transmitting side a folded=band signal $(E_5(t))$ with all the components of the upper and lower sidebands is generated by modulating the carrier frequency $(f_0)$ with data signals $(E_1(t))$, the carrier frequency $(f_0)$ being lower than the difference between the   upper and lower limiting frequencies of one unfolded sideband of the folded=band signal $(E_5(t))$, and at the receiving side processing the received folded= =band signals by their multiplication by signals, representing the sum of harmonic components of preselected frequencies and phases, and summing the products of these multiplication operations, this reducing the spectrum of the folded=band signal $(E_5(t))$ to a form allowing demodulation of the modulating signal $(E_1(t))$ therefrom.

2. A method as claimed in Claim 1, c h a r a c - t e r i z e d   b y   t h a t   in the reception of folded= =band amlitude modulated signals with and without carrier suppression, the received folded=band signals are processed by converting the carrier frequency $(f_0)$ of the folded=band signal $(E_5(t))$ with the aid of sequential multiplications of the  folded=band voltages by N harmonic voltage signals, wherein the frequency of the i=th harmonic signal is $f \cdot 2^{i-1}$ , $1 \leq i \leq N$, and detection of the modulated signal with unfolded sidebands is performed at a coverted carrier frequency $(f_0 \cdot 2^N)$ higher than the upper limiting frequency $(f_{max})$ in the modulating signal $(E_1(t))$ spectrum.

3. A method as claimed in Claim 1, c h a r a c - t e r i z e d   b y   t h a t   in the reception of folded=band amplitude modulated signals with and without carrier suppression, the received folded=band signals are processed by converting the folded=band signal carrier frequency ($f_o$) by means of multiplying this folded=band signal ($E_5(t)$) by a signal of the form

$$U_1(t) = \sum_{i=1}^{N} (-1)^i \sin(2i - 1)\omega_o t ,$$

where $\omega_o = 2\pi f_o$, $1 \leqslant i \leq N$, and the modulated signal with unfolded sidebands is detected at a carrier frequency ($f_o 2N$) higher than the upper limiting frequency ($f_{max}$) in the modulating signal ($E_1(t)$) spectrum.

4. A method as claimed in Claim 1, c h a r a c - t e r i z e d   b y   t h a t   in the reception of folded=band amlitude modulated signals with and without carrier suppression the received folded=band signal is processed by converting the carrier frequency ($f_o$) of the folded=band signal ($E_5(t)$) by means of N independent multiplications of this signal ($E_5(t)$) by a har-monic signal of the form

$$U_i(t) = (-1)^i \sin\left[\omega_x + \omega_o(2i - 2)\right] t,$$

where $\omega_x = 2\pi f_x \geqslant \omega_o = 2\pi f_o$, and summing the products of these N multiplication operations, with detection of the modulated signal with unfolded sidebands performed at a carrier frequency $f_x + f_o(2N - 1)$ higher than frequency $f_x - f_o$ by more than the upper limiting fre-quency ($f_{max}$) in the modulating signal ($E_1(t)$) spectrum.

5. A method as claimed in Claim 1, c h a r a c - t e r i z e d   b y   t h a t   in folded=band quadra-ture modulated and folded=band angle modulated signal reception two received folded=band signal messages ($E_{5-1}(t)$, $E_{5-2}(t)$) with a phase shift ($\Delta \varphi_o$) between their carriers unequal to K , where K is an integer, are processed conjointly by multiplying each of the messages ($E_{5-1}(t)$), ($E_{5-2}(t)$) by an appropriate harmo-nic signal ($U_1(t)$, $U_2(t)$), with the carrier frequency ($f_x$) of both harmonic signals ($U_1(t)$) and ($U_2(t)$)

selected to be the same and higher than the upper limiting frequency of the folded=band signal spectrum being processed, and the phase shift between these harmonic signals set equal to $\pi - \Delta \varphi_0$ , and subsequently summing the products of both multiplication operations to generate a modulated signal with unfolded sidebands and a high carrier frequency $(f_x \pm f_0)$ and detecting this signal.

6. A method as claimed in Claim 1, c h a r a c - t e r i z e d   b y   t h a t   in folded=band quadrature modulated signals reception two received folded=band signal messages $(E_{5-1}(t), E_{5-2}(t))$ with a phase shift ( $\Delta \varphi_0$ ) between their carriers unequal to K , where K is an integer, are processed conjointly by multiplying one message $(E_{5-1}(t))$ by a harmonic signal of the form $U_1(t) = 2\sin2 \, f_0 t$ and by multiplying the other message $(E_{5-2}(t))$ by a harmonic signal of the form $U_2(t) = 2\sin(2\pi f_0 t + \pi - \Delta \varphi_0)$ and algebraic summing of the products of these multiplication operations to directly detect one of the modulating signals $(E_{1-1}(t))$, and by multiplying one message $(E_{5-1}(t))$ by a harmonic signal of the form $U_3(t) = 2\cos2 \, f_0 t$ and by multiplying the other message $(E_{5-2}(t))$ by a harmonic signal of the form $U_4(t) = 2\cos(2\pi f_0 t + \pi - \Delta \varphi_0)$ and by algebraic summing of the products of these multiplication operations to directly detect the second modulating signal $(E_{1-2}(t))$.

7. A method as claimed in the preceeding Claims 1, 2, 3, 4, 5, 6, c h a r a c t e r i z e d   b y   t h a t at the transmitting side folded=band amplitude modulated signal with or without carrier suppression, folded= =band quadrature modulated signals, and folded=band angle modulated signals are generated by first modulating by adata signals a carrier frequency $(f_x)$ higher than the difference between the upper and lower limiting frequencies of one unfolded sideband of the folded=band signal, thus generating an intermediate signal with un-

- 33 -

folded sidebands, and then translating this intermediate signal by heterodyne conversion into a folded=band signal with a carrier frequency ($f_o$).

8. A method as claimed in the preceeding Claims 1, 2,3,4,6, c h a r a c t e r i z e d   b y   t h a t at the transmitting side generation of folded=band amplitude modulated signal with and without carrier suppression and folded=band quadrature modulated signals is acomplished by modulating with data signals a carrier frequency ($f_o$) lower than the upper limiting frequency ($f_x$) in the modulating signal spectrum.

9. A method as claimed in Claims 1 and 5, chh a r a c t e r i z e d   b y   t h a t   at the transmitting side folded=band angle modulated signals are generated by modulating with data signals a carrier frequency ($f_o$) higher than the upper limiting frequency ($f_x$) in the modulating signal spectrum, but lower than the difference between the upper and lower limiting frequencies in one unfolded sideband of the folded=band signal, required at the modulation index selected.

10. A method as claimed in Claims 1 and 5, c h a r a c t e r i z e d   b y   t h a t   at the transmitting side folded=band angle modulated signals are generated by modulating with data signals a carrier frequency ($f_o$) lower than the upper limiting frequency ($f_x$) in the modulating signal spectrum and not exceeding the frequency deviation specified by the modulation index (m) selected.

EP 0 406 423 A1

FIG. 1

FIG. 2

FIG. 3

FIG. 4

FIG. 5

FIG. 6

FIG. 7

FIG. 8

FIG. 9

FIG. 10

FIG. 11

EP 0 406 423 A1

FIG. 12

FIG. 13

FIG.14

FIG. 15

EP 0 406 423 A1

# INTERNATIONAL SEARCH REPORT

International Application No PCT/SU 89/00014

## I. CLASSIFICATION OF SUBJECT MATTER (if several classification symbols apply, indicate all) •

According to International Patent Classification (IPC) or to both National Classification and IPC

IPC$^5$: H 04 B 7/00

## II. FIELDS SEARCHED

| Minimum Documentation Searched 7 | |
|---|---|
| Classification System | Classification Symbols |
| IPC$^4$ | H 04. B 7/00, 7/02, 7/16 |

Documentation Searched other than Minimum Documentation
to the Extent that such Documents are Included in the Fields Searched •

## III. DOCUMENTS CONSIDERED TO BE RELEVANT •

| Category * | Citation of Document, 11 with indication, where appropriate, of the relevant passages 12 | Relevant to Claim No. 13 |
|---|---|---|
| A | DE,A1,1466374 (SIEMENS AG) 17 January 1974 (17.01.74) see the claims,figure 1 | 1-10 |
| A | SU,A1,1070698 (A.N.Progressov et al) 30 January 1984 (30.01.84) | 1-10 |
| A | US,A,333052 (LEONARD R.KAHN) 25 July 1967 (25.07.67) | 1-10 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 21 September 1989 (21.09.89) | 12 October 1989 (12.10.89) |
| International Searching Authority | Signature of Authorized Officer |
| ISA/SU | |

Form PCT/ISA/210 (second sheet) (January 1985)